# EUROPEAN PATENT APPLICATION

(11) **EP 4 432 726 A1**
(43) Date of publication of application: **18.09.2024**
(21) Application number: 22913040.6
(22) Date of filing: 14.04.2022
(51) Int. Cl.: H04W 28/18, H04W 52/02

(54) **DATA TRANSMISSION METHOD AND DEVICE, POWER STATE ADJUSTMENT METHOD AND DEVICE, COMPUTER READABLE STORAGE MEDIUM, AND ELECTRONIC DEVICE**

(30) Priority: 30.12.2021 CN 202111669820
(71) Applicant: ZTE Corporation, Shenzhen, Guangdong 518057 (CN)
(72) Inventor: LI, Yan, Shenzhen, Guangdong 518057 (CN)
(74) Representative: Mozzi, Matteo
(86) International application number: PCT/CN2022/086802
(87) International publication number: WO 2023/123738

(57) **Abstract**

A data transmission method and device, a power state adjustment method and device, a computer readable storage medium, and an electronic device are provided. The data transmission method includes: sending, by a first node, a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and comprised in other links except the first link, and the other links are pre-established links for data transmission between the first node and the second node; and transmitting, by the first node, data to the second node on the second link.

## Description

### Cross-Reference to Related Application

The present disclosure claims priority to Chinese Patent Application No. 202111669820.6 filed on December 30, 2021, the content of which is incorporated herein by reference in its entirety.

### Technical Field

Embodiments of the present disclosure relate to the field of communications, and in particular, to a data transmission method and device, a power state adjustment method and device, a computer readable storage medium, and an electronic device.

### Background

Unicast transmission is increasingly used in network technologies, and the vast majority of data on a network is currently transmitted in the form of unicast. For example, when network users send and receive emails or browse web pages, they need to establish connections with mail servers and web servers. When interacting with these servers, unicast data transmission is used.

When performing downlink transmission of unicast data on multiple links, if a station (STA) on a certain link is in a power save mode, an Access Point (AP) needs to buffer unicast data to be sent to the STA, and then the AP can send the buffered unicast data to the STA when a next Beacon frame carrying a corresponding Traffic Indication Map (TIM) arrives to wake up the STA in a doze state.

Therefore, when a new link is enabled to perform transmission in a scenario of downlink low delay transmission, low delay data may be buffered due to the fact that a corresponding STA on the link is in a power save mode, thereby affecting the low delay transmission.

There is currently no effective solution to the problem of high data transmission delay in related technologies, which leads to the inability to transmit low delay data in a timely manner.

### Summary

According to the embodiments of the present disclosure, provided is a data transmission method, including: sending, by a first node, a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and included in other links except the first link, and the other links are pre-established links for data transmission between the first node and the second node; and transmitting, by the first node, data to the second node on the second link.

According to the embodiments of the present disclosure, also provided is a power state adjustment method, including: receiving, by a second node, a request frame from a first node, wherein the request frame is sent by the first node in response to detecting that a first link for data transmission between the first node and the second node currently does not satisfy a low delay data transmission requirement; determining, by the second node, a second link under triggering of the request frame, wherein the second link is a link satisfying the low delay data transmission requirement and included in other links except the first link, and the other links are pre-established links for data transmission between the first node and the second node; and adjusting, by the second node, a power state of a target station on the second link to an active mode.

According to the embodiments of the present disclosure, also provided is a data transmission device, which is provided in a first node and includes: a sending module, configured to send a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and included in other links except the first link, and the other links are pre-established links for data transmission between the first node and the second node; and a transmitting module, configured to transmit data to the second node on the second link.

According to the embodiments of the present disclosure, also provided is a power state adjustment device, which is provided in a second node and includes: a receiving module, configured to receive a request frame from a first node, wherein the request frame is sent by the first node in response to detecting that a first link for data transmission between the first node and the second node currently does not satisfy a low delay data transmission requirement; a determining module, configured to determine a second link under triggering of the request frame, wherein the second link is a link satisfying the low delay data transmission requirement and included in other links except the first link, and the other links are pre-established links for data transmission between the first node and the second node; and an adjusting module, configured to adjust a power state of a target station on the second link to an active mode.

According to the embodiments of the present disclosure, also provided is a computer readable storage medium. The computer readable storage medium stores a computer program. The computer program, when running on a processor, causes the processor to implement the operations of the data transmission method and the power state adjustment method.

According to the embodiments of the present disclosure, also provided is an electronic device, including a memory and a processor, wherein the memory stores a computer program, and the processor is configured to run the computer program so as to execute the operations of the data transmission method or the power state adjustment method.

### Brief Description of the Drawings

Fig. 1 is a schematic diagram of an application scenario according to the embodiments of the present disclosure;
Fig. 2 is a schematic diagram of a unicast transmission mechanism when a station (STA) is in a power save mode according to the embodiments of the present disclosure;
Fig. 3 is a schematic diagram of reporting a power management mode of an STA according to the embodiments of the present disclosure;
Fig. 4 is a schematic diagram of a low delay data session process according to the embodiments of the present disclosure;
Fig. 5 is a schematic diagram of a Traffic Indication Map (TIM) indication within a Beacon frame in a multi-link device according to the embodiments of the present disclosure;
Fig. 6 is a structural block diagram of hardware of a mobile terminal for implementing a data transmission method or a power state adjustment method according to the embodiments of the present disclosure;
Fig. 7 is a flowchart of a data transmission method according to the embodiments of the present disclosure;
Fig. 8 is a schematic diagram of a multi-link Stream Classification Service (SCS) transmission link element format according to the embodiments of the present disclosure;
Fig. 9a is a schematic diagram of an SCS Transmission Link Negotiation element format for multi-link according to the embodiments of the present disclosure;
Fig. 9b is a schematic diagram of a transmission link field format according to the embodiments of the present disclosure;
Fig. 10 is a schematic diagram of a downlink low delay transmission according to an example of the present disclosure;
Fig. 11 is a schematic diagram of a downlink low delay transmission according to an example of the present disclosure;
Fig. 12 is a schematic diagram of a downlink low delay transmission according to an example of the present disclosure;
Fig. 13 is a schematic diagram of a downlink low delay transmission according to an example of the present disclosure;
Fig. 14 is a flow chart of a power state adjustment method according to the embodiments of the present disclosure;
Fig. 15 is a schematic diagram of a downlink low delay transmission according to an example of the present disclosure;
Fig. 16 is a structural block diagram of a data transmission device according to the embodiments of the present disclosure; and
Fig. 17 is a block diagram of a power state adjustment device according to the embodiments of the present disclosure.

### Detailed Description

The embodiments of the present disclosure will be described below in detail with reference to the drawings and embodiments.

It should be noted that terms such as "first" and "second" in the description, claims, and accompanying drawings of the present disclosure are used to distinguish similar objects, but are not used to describe a specific sequence or order.

First, technologies related to the embodiments of the present disclosure are described as follows.

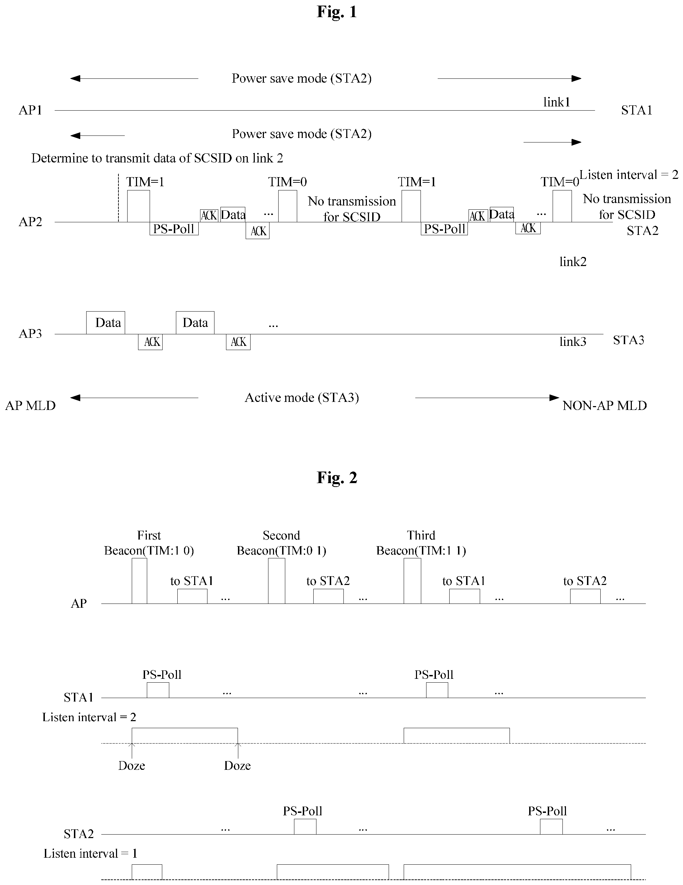

In relevant technologies, during data transmission, when a Station (STA) is in power save mode, a polling frame is sent by an Access Point (AP) to specify the transmission of each STA. In a case of multi-link unicast data transmission, a Beacon frame carrying a Traffic Indication Map (TIM) is used to wake up the STA in a doze mode to perform data transmission. When a downlink delay is low and the STA is in the doze mode, activating the transmission of a new link may result in significant delay. The specific application scenario of the embodiments of the present disclosure is shown in Fig. 1, as shown in Fig. 1, three links are established between AP Multi-Link Devices (MLDs) and non-AP MLDs, namely link1, link2, and link3. In the example, STA1 and STA2 in the non-AP MLDs are in a power save mode, while STA3 is in an active mode.

Initially, AP3 and STA3 perform low delay downlink transmission on link3.

When link3 deteriorates, AP3 decides to enable link2 for assisting in low delay data transmission. However, as STA2 is in the power save mode, and AP2 cannot actively change a power management mode of STA2, data transmission has to be carried out according to power save mode requirements.

STA2 wakes up periodically at a set listen interval upon arrival of Beacon frames to check TIM information, to determine if there is any unicast information sent to STA2. As shown in Fig. 1, the listen interval of STA2 may be set to 2, and STA2 wakes up every 2 Beacon cycles. Therefore, as shown in Fig. 1, within the interval of Beacon cycles, STA2 cannot receive unicast data frames sent by AP2, which affects low delay data transmission. Specifically, the larger the value of the listen interval of STA2 is, the greater the transmission delay of the unicast data will be.

The power management mode may be classified into an active mode and a power save mode.

In the active mode, the STA can send and receive frames at any time and remains in an awake state at any time.

In the power save mode, the STA can send and receive frames in some periods, and is in a doze state at other periods. States of the power save mode may be classified into an awake state and a doze state.

With regard to the awake state, the STA enters the awake state when a specific Beacon frame carrying a TIM arrives, and the STA can send and receive frames in the awake state.

With regard to the doze state, the STA enters the doze state at other periods except the periods of the wake state, and cannot send and receive frames in the doze state.

The transmission mechanism of unicast when an STA is in a power save mode is described below. Fig. 2 is a schematic diagram of a unicast transmission mechanism when a station (STA) is in a power save mode according to the embodiments of the present disclosure. Before the first Beacon frame is sent, both STA1 and STA2 wake up. After the Beacon frame is received, it is found based on the Beacon frame that there is a unicast buffer message only for STA1 in the frame, therefore STA2 enters the doze state, and STA1 sends a PS-Poll frame to trigger unicast data interaction between STA1 and the AP. After the unicast data buffered at the AP is completely transmitted, STA1 enters the doze state.

Before the second Beacon frame is sent, since the listen intervals of STA1 and STA2 are respectively 2 and 1, STA1 will not wake up during the current Beacon period, while STA2 will wake up during the current Beacon period. After STA2 wakes up, STA2 finds, upon receiving a Beacon frame, that there is a unicast buffer message for STA2 in the frame, and therefore sends a PS-Poll frame to trigger data interaction between STA2 and the AP. After all the data buffered at the AP is completely transmitted, STA2 enters the doze state.

When the third Beacon frame arrives, both STA1 and STA2 wake up to sequentially receive downlink buffer data.

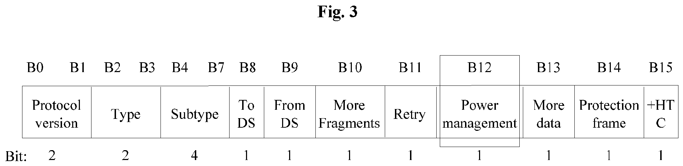

Fig. 3 is a schematic diagram of reporting a power management mode of an STA according to the embodiments of the present disclosure. A power management mode of an STA is carried in a Power Management field of a frame, where the Power Management field being set to 1 indicates that the power management mode of the STA is a power save mode, and the Power Management field being set to 0 indicates that the power management mode of the STA is an active mode.

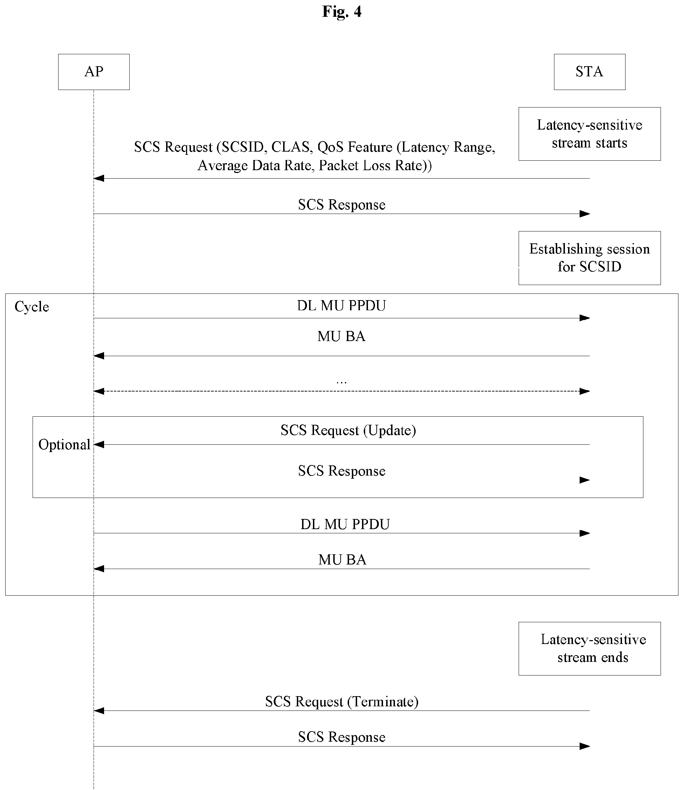

Fig. 4 is a schematic diagram of a low delay data session process according to the embodiments of the present disclosure. As shown in Fig. 4, the low delay data session process may include operations S401 to S405.

In operation S401, the STA sends a Stream Classification Service request (SCS request), where an SCS identifier (SCSID) carried in the SCS request is used as an identifier of low delay; a CLAS carries a requirement for traffic classification (for example, traffic classification according to IP, Transmission Control Protocol (TCP), User Datagram Protocol (UDP), and Ethernet), and data, which complies with the classification requirement carried by the CLAS, in a subsequent downlink stream will be transmitted according to requirements of a Quality of Service (QoS) feature; the QoS feature contains requirements for a stream, for example, a delay bound limits a transmission delay of a stream, a mean data rate poses requirements for a mean data rate of a stream, and a packet loss rate poses requirements for a delivery ratio of a MAC Service Data Unit (MSDU).

In operation S402, after receiving the SCS request from the STA, if the subsequent data streams sent to the STA satisfy the requirements of the CLAS, the AP needs to ensure the data streams according to the QoS feature.

In operation S403, a downlink multi-user data transmission is performed.

In operation S404, during the process of the SCS session, if the STA has a new requirement for the stream of the SCSID, the session information may be updated.

In operation S405, the SCS session is terminated after the transmission of the low delay data is completed.

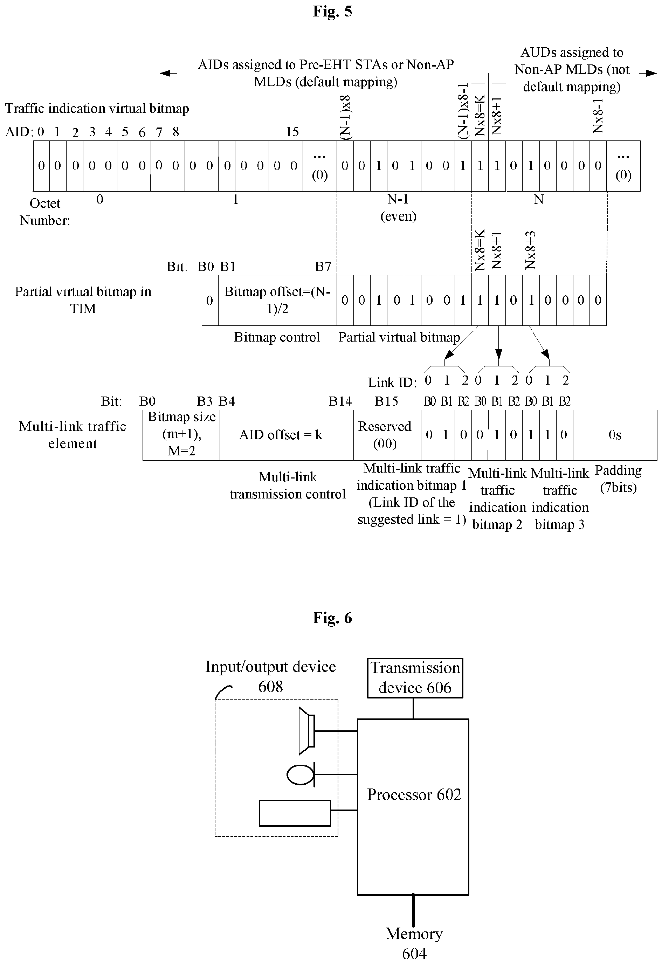

Fig. 5 is a schematic diagram of a TIM indication within a Beacon frame in a multi-link device according to the embodiments of the present disclosure. As shown in Fig. 5, the TIM indication may include a traffic indication virtual bitmap, a partial virtual bitmap in TIM, and a multi-link traffic element.

The traffic indication virtual bitmap is provided for all STAs. An AID field corresponding to an STA being set to 1 represents that there is a buffered unicast message for the STA at the AP; and an AID field corresponding to an STA being set to 0 represents that there is no buffered information for the STA at the AP.

The partial virtual bitmap in TIM is proposed in order to reduce a bitmap length, and improve transmission efficiency of Beacon frames. A Traffic indication virtual bitmap is optimized, so that a bitmap offset is used as an offset to clip a partial bitmap without buffer information.

As regards the multi-link traffic element indication, in a multi-link scenario, the bitmap is refined to specify a designated link on which the multi-link device is expected to receive the buffer information; if the field is set to 1, it indicates that the multi-link device is expected to receive the buffer information on the corresponding link.

In multi-link low delay data downlink transmission, when a new link is enabled for transmission, an STA in a power save mode on the link may cause an increase in a delay of low delay data transmission. In view of this problem, the embodiments of the present disclosure propose a solution that enables a new link through negotiation between an AP and an STA to implement assistance link transmission or switched link transmission. The STA on the new link switches its power management mode from the power save mode to the active mode, thereby avoiding a delay problem caused by receiving buffered downlink unicast data in the power save mode. The present disclosure will be described below with reference to the embodiments.

The methods provided in the embodiments of the present disclosure may be executed in a mobile terminal, a computer terminal, or a similar computing apparatus. By taking that the method provided in the embodiments of the present disclosure is run on a mobile terminal as an example, Fig. 6 is a structural block diagram of hardware of a mobile terminal for implementing a data transmission method or a power state adjustment method according to the embodiments of the present disclosure. As shown in Fig. 6, the mobile terminal may include one or more (only one is shown in Fig. 6) processors 602 (the one or more processors 602 may include, but are not limited to, a microprocessor (e.g., a Micro Controller Unit (MCU)) or a processing apparatus such as a programmable logic device (e.g., a Field Programmable Gate Array (FPGA)) and a memory 604 for storing data. In some implementations, the mobile terminal may further include a transmission device 606 for a communication function and an input/output device 608. Those having ordinary skill in the art may understand that the structure shown in Fig. 6 is merely exemplary, which does not limit the structure of the foregoing mobile terminal. For example, the mobile terminal may further include more or fewer components than shown in Fig. 6, or have a different configuration from that shown in Fig. 6.

The memory 604 may be configured to store a computer program, for example, a software program and a module of application software, such as a computer program corresponding to the data transmission method or the power state adjustment method in the embodiments of the present disclosure. The one or more processors 602 run the computer program stored in the memory 604, so as to execute various function applications and data processing, that is, to implement the foregoing method. The memory 604 may include high-speed random access memory, and may also include non-volatile memory, such as one or more magnetic storage devices, flash memory, or other non-volatile solid-state memory. In some embodiments, the memory 604 may further include a memory that is remotely located relative to the one or more processors 602, and the remote memory may be connected to the mobile terminal through a network. Examples of such network include, but are not limited to, the Internet, an intranet, a local area network, a mobile communication network, and combinations thereof.

The transmission device 606 is configured to receive or transmit data via a network. Specific examples of the described network may include a wireless network provided by a communication provider of the mobile terminal. In some embodiments, the transmission device 606 includes a Network Interface Controller (NIC) that may be coupled to other network devices via a base station to communicate with the Internet. In some embodiments, the transmission device 606 may be a Radio Frequency (RF) module configured to wirelessly communicate with the Internet.

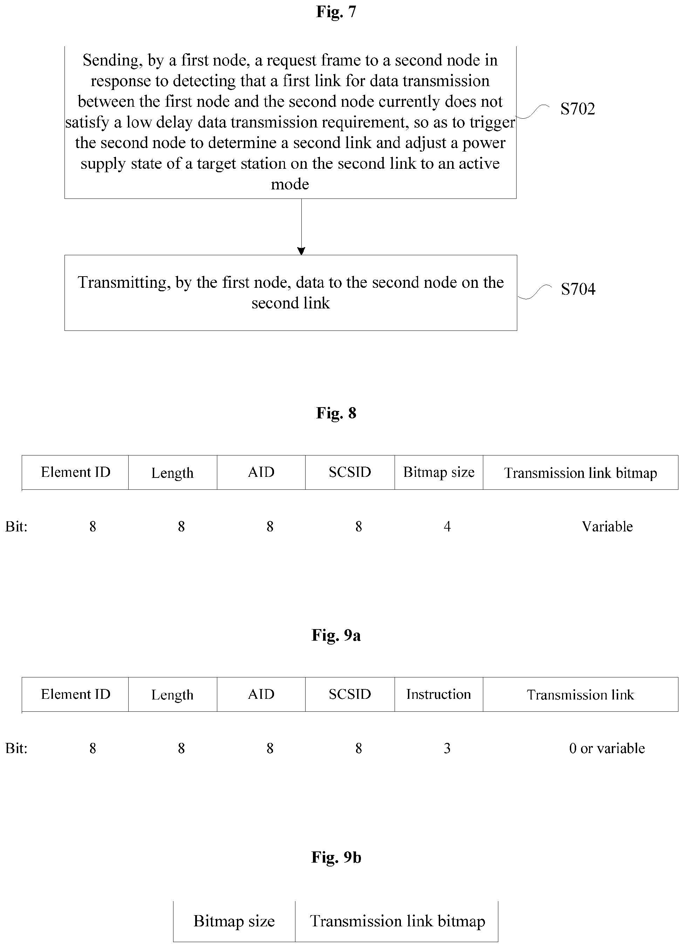

Fig. 7 is a flowchart of a data transmission method according to the embodiments of the present disclosure. As shown in Fig. 7, the data transmission method includes operations S702 and S704.

In operation S702, a first node sends a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and included in other links except the first link, and the other links are pre-established links for data transmission between the first node and the second node.

In operation S704, the first node transmits data to the second node on the second link.

By means of the described operations S702 and S704, when it is determined that a new link needs to be enabled for data transmission, the first node and the second node may perform a negotiation so as to determine the new link to be enabled, and further the power state of a station on the new link to be enabled is adjusted, so that the station on the new link can receive and send data in time. The solution provided in the embodiments of the present disclosure may realize timely transmission of data, avoid delayed transmission of low delay data, and effectively solve the problem of high data transmission delay which leads to the inability to transmit low delay data in a timely manner.

In the data transmission method, the first node may be an AP node or an AP MLD (Multiple Link Device) node, and the second node may be an STA or a non-AP MLD node. In the embodiments of the present disclosure, both the first node and the second node may determine, based on a certain low delay transmission judgment criterion, whether a current transmission link satisfies a low delay data transmission requirement. For example, the first node may perform judgment based on a downlink low delay transmission judgment criterion, that is, the first node may determine that a current downlink transmission link does not support low delay transmission when determining that the downlink low delay transmission currently does not satisfy a QoS requirement, that is, when determining that the downlink low delay transmission currently does not satisfy requirements of the QoS feature during an SCS session (for example, the transmission delay requirement of a stream limited by a delay bound, and/or a mean data rate requirement for a stream, and/or a packet loss rate requirement for an MSDU delivery ratio, and the like). In addition, the second node may perform judgment based on an uplink low delay transmission judgment criterion, that is, the second node may determine that a current uplink transmission link does not support low delay transmission when determining that the uplink low delay transmission currently does not satisfy a QoS requirement, that is, when determining that the uplink low delay transmission currently does not satisfy requirements of the QoS feature during an SCS session (for example, the transmission delay requirement of a stream limited by a delay bound, and/or a mean data rate requirement for a stream, and/or a packet loss rate requirement for an MSDU delivery ratio, and the like). In practical applications, it may be feasible to make either the first node or the second node determine whether a new link needs to be enabled. Definitely, it may also be feasible to make both the first node and the second node determine whether a new link needs to be enabled. Two manners for adjustment of the low delay transmission link involved in the embodiments of the present disclosure are described as follows by taking the case where the first node is an AP MLD and the second node is a non-AP MLD as an example.

### Manner 1

The AP MLD carries a multi-link traffic classification service transmission link element (multi-link SCS transmission link element) in a Beacon frame. Specifically, when the AP MLD determines a target link, the AP MLD carries the multi-link SCS transmission link element in the Beacon frame to inform the non-AP MLD of an adjustment condition of the target link of low delay transmission. Fig. 8 is a schematic diagram of a multi-link SCS transmission link element format according to the embodiments of the present disclosure.

Specifically, the AID is an identifier assigned by the AP MLD to the non-AP MLD and used for distinguishing different stations, when the non-AP MLD is associated with the AP MLD.

The SCSID is an identifier of a low delay data stream. The SCSID is consistent with an SCSID carried in the frame when negotiation of the SCS session process is successful, and is used for distinguishing different low delay data streams.

The bitmap size indicates the number of links in the non-AP MLD, and is consistent with a bitmap size in the multi-link traffic element. The bitmap size may be used for indicating a current working link between the non-AP MLD and the AP MLD.

The Transmission Link Bitmap represents a corresponding link that can be used for low delay transmission corresponding to the SCSID. For example, the bitmap size being 2 represents that there are three working links; and the Transmission Link Bitmap being 011 indicates that link1 and link2 can be used for low delay transmission, and link 0 cannot be used for low delay transmission. After receiving the bitmap, the non-AP MLD may determine, based on the bitmap, that links that can be used for low delay transmission are link1 and link2, and therefore the non-AP MLD needs to ensure that the corresponding STAs on link1 and link2 are in an active mode to prepare for low delay transmission. It should be noted that, the above identification manner of the Transmission Link Bitmap is only an example, and in practical applications, link(s) that can be used for low delay transmission and link(s) that cannot be used for low delay transmission may also be identified by other characters.

### Manner 2

The negotiation between the AP MLD and the non-AP MLD regarding the low delay transmission link may be realized through a newly added unicast SCS transmission link request/response frame. Table 1 is an action field format of an SCS transmission link request/response. Fig. 9a is a schematic diagram of an SCS Transmission Link Negotiation element format for multi-link according to the embodiments of the present disclosure. Fig. 9b is a schematic diagram of a transmission link field format according to the embodiments of the present disclosure. Table 2 shows values of command fields according to the embodiments of the present disclosure.

**Table 1**

| Order | Information |
|---|---|
| 1 | Category |
| 2 | EHT Action |
| 3 | Dialog Token |
| 4 | Multi-link SCS Transmission Link Negotiation Element |

**Table 2**

| Command Value | Command Name | Description |
|---|---|---|
| 0 | Request | Request a peer end to provide a transmission link, the request not carrying information of the transmission link |
| 1 | Suggest | Carry, in the request, a suggested transmission link |
| 2 | Alternate | Carry, in the response, a suggested transmission link, and advise the peer end to re-initiate a request according to the suggested value |
| 3 | Accept | Accept the request |
| 4 | Reject | Reject the request |

The AP may send an SCS Transmission Link Request frame on the current low delay transmission link. If the STA and the AP (corresponding to the above AP MLD and non-AP MLD) negotiate the transmission link successfully, the STA will reply with an SCS Transmission Link Response (Accept) frame on the target link, and actively adjust the power state of the STA working on the target link to an active mode to prepare for subsequent downlink low delay transmission. If the negotiation about the transmission link between the STA and the AP fails, the STA will reply with an SCS Transmission Link Response (Reject) frame on the original link.

Various adjustment manners are respectively described as follows with reference to implementations.

In some implementations, the operation that the first node sends the request frame to the second node includes: the first node sends a first request frame to the second node to request the second node to determine the second link, wherein the request frame includes the first request frame. The data transmission method further includes: before the first node transmits the data to the second node on the second link, the first node receives a first response frame returned by the second node in response to the first request frame. The operation that the first node transmits the data to the second node on the second link includes: in a case where the first node determines that the first response frame is a reception response frame, the first node determines the second link from first indication information carried in the first response frame and used for indicating that the second link satisfies the low delay data transmission requirement, and the first node transmits the data to the second node on the second link, wherein the second link is a link selected by the second node based on a target selection mode. In the present embodiment, the first request frame may include a SCS Transmission Link Request frame, and the first response frame may include a SCS Transmission Link Response (Accept) frame. If the first response frame includes a SCS Transmission Link Response (Reject) frame, it indicates that the response end rejects the request and the negotiation fails.

The first indication information may include identification information in the Transmission Link Bitmap, for example, 011. It may be appreciated that other identification information may also be used in the Transmission Link Bitmap to represent the first indication information, and the specific indication manner is not limited as long as the identification information can indicate which links satisfy low delay transmission. The foregoing implementation is described below with reference to specific examples.

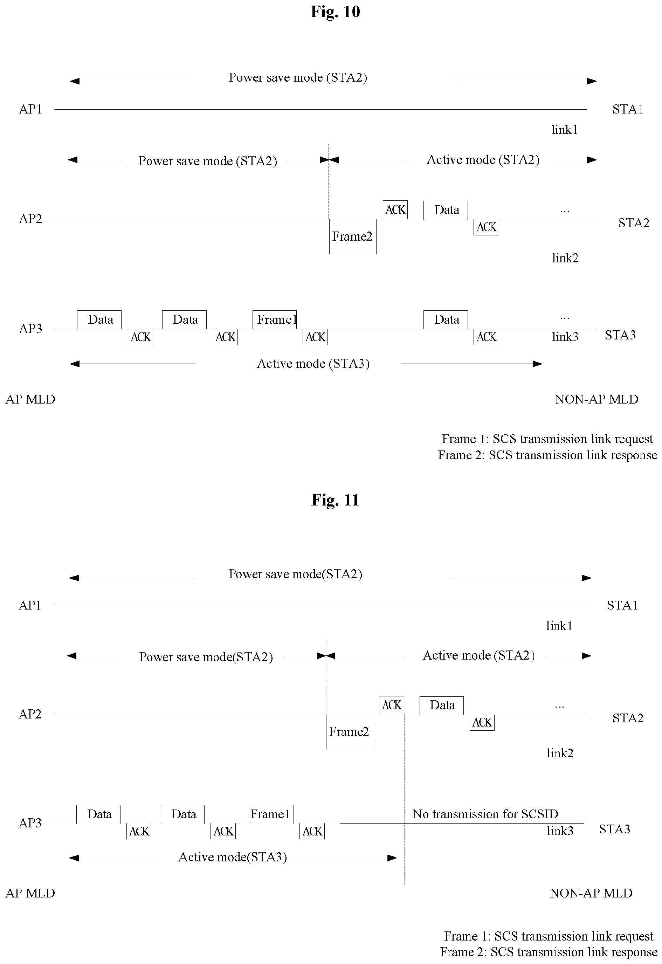

Fig. 10 is a schematic diagram of a downlink low delay transmission according to an example of the present disclosure. In the example, an assistance transmission link and an action frame are used, and the downlink low delay transmission in the process in the example includes the following operations S1001 to S1004.

In operation S1001, an AP MLD finds that a mean transmission rate on link3 is lower than a mean data rate requirement, and determines link2 as an assistance transmission link according to Mode 1 in the target link selection criteria.

In operation S1002, the AP MLD actively initiates an SCS Transmission Link Request frame on link3, and the SCS Transmission Link Request frame does not carry a Transmission Link Bitmap.

In operation S1003, a non-AP MLD receives the request sent by the AP MLD, and returns an SCS Transmission Link Response (Accept) frame to the AP MLD on link2. The Transmission Link Bitmap carried in the SCS Transmission Link Response (Accept) frame is 011, and the power management state is adjusted to the active mode.

In operation S1004, the AP MLD transmits downlink low delay data on both link2 and link3.

The above target link selection criteria include Mode 1 and Mode 2 (the target link selection criteria in the subsequent examples can also perform selection in the following two modes).

### Mode 1

The STA (namely, the non-AP MLD) selects a target link through comprehensive determination, such as link measurement (signal strength RF), channel load measurement (utilization ratio of a channel), transmission traffic/transmission category measurement, and historical traffic statistics.

### Mode 2

The AP (namely, the AP MLD) selects a target link through comprehensive determination, such as link measurement (signal strength RF), channel load measurement (utilization ratio of a channel), transmission traffic/transmission category measurement, and historical traffic statistics.

In some implementations, the operation that the first node sends the request frame to the second node includes: the first node selects the second link based on a target selection mode, and sends, to the second node, a second request frame carrying second indication information used for indicating that the second link satisfies the low delay data transmission requirement, so as to instruct the second node to determine the second link and adjust the power state of the target station on the second link to the active mode, wherein the request frame includes the second request frame. The data transmission method further includes: before the operation that the first node transmits the data to the second node on the second link, the first node receives a second response frame returned by the second node in response to the second request frame. The operation that the first node transmits the data to the second node on the second link includes: in a case where the first node determines that the second response frame is a reception response frame, the first node transmits the data to the second node on the second link. In the present embodiment, the second request frame may include a Transmission Link Request (suggest) frame of the SCS, and the second indication information may include identification information in the Transmission Link Bitmap carried in the second request frame, for example, 010. It may be appreciated that the second indication information may also be represented by other identification information in the Transmission Link Bitmap, and the specific indication manner is not limited as long as the identification information can indicate which links satisfy low delay transmission. The second response frame may include a SCS Transmission Link Response (Accept) frame. If the second response frame includes a SCS Transmission Link Response (Reject) frame, it indicates that the response end rejects the request and the negotiation fails. The foregoing implementation is described below with reference to specific examples.

Fig. 11 is a schematic diagram of a downlink low delay transmission according to an example of the present disclosure. In the example, a switch transmission link and an action frame are used, and the process in the example includes the following operations S1101 to S1104.

In operation S1101, an AP MLD finds that a minimum transmission rate on link3 is lower than a minimum data rate requirement, and determines, according to Mode 1 in the target link selection criteria, that the switch transmission link is link2.

In operation S1102, the AP MLD actively initiates an SCS Transmission Link Request (Suggest) frame on link3, and the Transmission Link Bitmap carried in the SCS Transmission Link Request (Suggest) frame is 010.

In operation S1103, a non-AP MLD receives the request sent by the AP MLD, returns an SCS Transmission Link Response (Accept) frame to the AP MLD on link2, and adjusts the power management state to the active mode.

In operation S1104, the AP MLD stops the downlink low delay transmission on link3, and starts the downlink low delay transmission on link2.

In some embodiments, the target selection mode includes: selecting the second link satisfying the low delay data transmission requirement based on at least one of: link measurements, channel load measurements, transmission traffic or transmission category measurements, or historical traffic statistics. In this example, a link compliant with the low delay data transmission requirement can be determined by the aforementioned target link selection criteria. Through the foregoing implementation, it may be implemented that a proper link capable of performing low delay data transmission is selected.

In some embodiments, the operation that the first node sends the first request frame to the second node includes: the first node sends the first request frame to the second node on the first link; and the operation that the first node receives the first response frame returned by the second node in response to the first request frame includes: the first node receives the first response frame returned on the second link by the second node in response to the first request frame. In the foregoing implementation, in a case where the first link does not satisfy the low delay data transmission requirement, a request frame is sent to the second node on the first link, and a response frame returned by the second node is received on the second link. It should be noted that, returning the response frame on the second link is merely an example, and in an actual application, the response frame may alternatively/further be returned on the first link.

In some embodiments, the operation that the first node sends, to the second node, the second request frame includes: the first node sends the second request frame to the second node on the first link; and the operation that the first node receives the second response frame returned by the second node in response to the second request frame includes: the first node receives the second response frame returned by the second node on the second link in response to the second request frame. In the foregoing implementation, the first node sends the second request frame to the second node, so as to inform the second node of which link is a link satisfying the low delay data transmission requirement. Likewise, when the second node returns a response frame to the first node, the response frame may be sent on the second link. It should be noted that, returning the response frame on the second link is merely an example, and in an actual application, the response frame may alternatively/further be returned on the first link.

In some embodiments, the operation that the first node transmits the data to the second node on the second link includes: the first node transmits the data to the second node on the second link in response to receiving a first trigger frame from the second node, wherein the first trigger frame is used for indicating that the second node has determined the second link and has adjusted the power state of the target station on the second link to the active mode. In the foregoing implementation, after the first node sends the third request frame on the target link, if the power state of the target station of the second node on the second link is adjusted to the active mode, the second node may send, on the second link, a trigger frame to the first node to indicate that the second link has been determined and that power state adjustment has been completed for the target station on the second link. In the foregoing implementation, the first trigger frame may include a trigger frame. The implementation is described as follows with reference to a specific example.

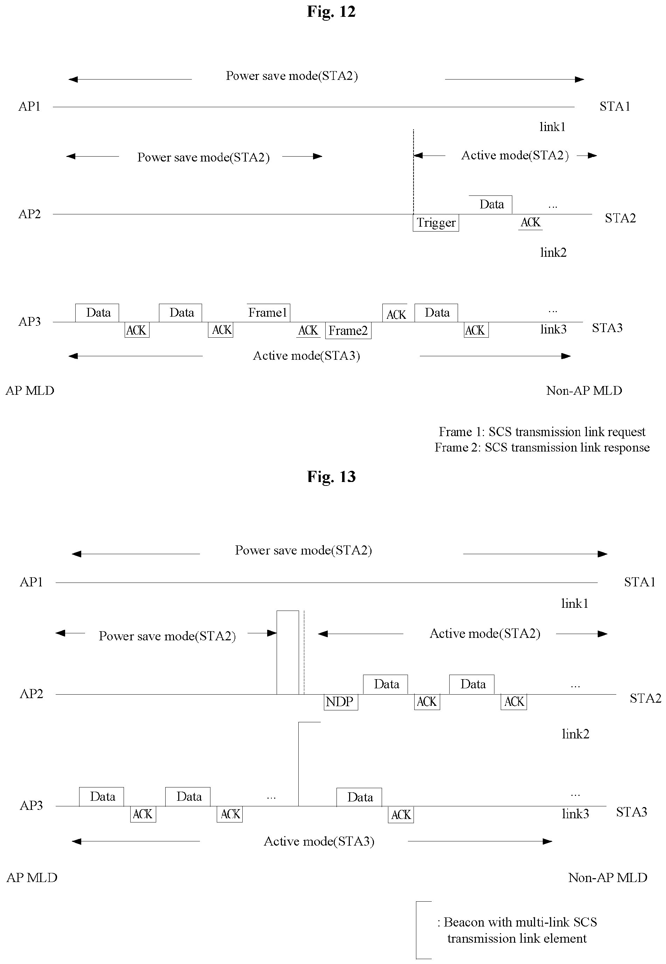

Fig. 12 is a schematic diagram of a downlink low delay transmission according to an example of the present disclosure. In the example, an assistance transmission link, an action frame and a trigger frame are used, and the process in the example includes the following operations S1201 to S1205.

In operation S1201, an AP MLD finds that a mean transmission rate on link3 is lower than a mean data rate requirement, and determines that the assistance transmission link is link2 according to Mode 1 in the target link selection criteria.

In operation S1202, the AP MLD actively initiates an SCS Transmission Link Request frame on link3, and the SCS Transmission Link Request frame does not carry a Transmission Link Bitmap.

In operation S1203, a non-AP MLD receives the request sent by the AP MLD, and returns an SCS Transmission Link Response (Accept) frame to the AP MLD on link3, and the Transmission Link Bitmap carried in the SCS Transmission Link Response (Accept) frame is 011.

S1204, the non-AP MLD sends a trigger frame to notify the AP after STA2 completes switching of the power management state to the active mode on link2.

S1205, the AP MLD transmits the downlink low delay data on both link2 and link3.

In some embodiments, the operation that the first node sends the request frame to the second node includes: the first node selects the second link based on a target selection mode, and sends, to the second node, a third request frame carrying third indication information used for indicating that the second link satisfies the low delay data transmission requirement, so as to instruct the second node to determine the second link and adjust the power state of the target station on the second link to the active mode, wherein the request frame includes the third request frame; and the operation that the first node transmits the data to the second node on the second link includes: the first node transmits the data to the second node on the second link in response to receiving a second trigger frame from the second node, wherein the second trigger frame is used for indicating that the second node has determined the second link and has adjusted the power state of the target station on the second link to the active mode. In the foregoing implementation, when determining that the second link satisfies the low delay data transmission requirement, the first node sends a third request frame to the target station of the second node, so as to request to change the power state of the target station, that is, to adjust the power state of the target station to an active mode. The third request frame may include a multi-link SCS transmission link element, and the third indication information may include identification information in a Transmission Link Bitmap, for example, 011. It may be appreciated that other identification information may also be used in the Transmission Link Bitmap to represent the third indication information, and the specific indication manner is not limited as long as the identification information can indicate which links satisfy low delay transmission. The foregoing implementation is described below with reference to specific examples.

Fig. 13 is a schematic diagram of a downlink low delay transmission according to an example of the present disclosure. In the example, an assistance transmission link and a Beacon frame are used, and the process in the example includes the following operations S1301 to S1304.

In operation S1301, an AP MLD finds that a transmission delay on link3 is greater than a delay bound requirement, and determines that the assistance transmission link is link2 according to Mode 1 in the target link selection criteria.

In operation 1302, the AP MLD carries a multiple link SCS transmission link element in a Beacon frame of link2 and link3, and a Transmission Link Bitmap in the multiple link SCS transmission link element is 011.

In operation S1303, after receiving the Beacon frame, a non-AP MLD actively adjusts the power management state of the corresponding STA2 on link2 to the active mode, and sends an NDP to notify the AP2 that STA2 has switched to the active mode.

In operation S1304, the AP MLD transmits downlink low delay data on both link2 and link3.

In some embodiments, the operation that the first node sends the third request frame to the second node includes: the first node sends the third request frame to the second node on the first link and the second link. In the described embodiment, the first node may send the third request frame on the first link and the second link at the same time. By means of the described embodiment, the speed of information transmission is improved, thereby accelerating the speed of completing the change of the power state of the target station. It may be appreciated that in an actual application, the third request frame may also be sent on only one of the first link or the second link.

In some embodiments, the operation that the first node transmits the data to the second node on the second link includes one of the following: the first node stops transmitting target data to the second node on the first link, and transmitting, by the first node, the target data to the second node on the second link; the first node transmits target data to the second node on the first link, and transmitting, by the first node, the target data to the second node on the second link; or the first node transmits a first part of data included in target data to the second node on the first link, and transmits other data, except the first part of data, included in the target data to the second node on the second link. In the present embodiment, there may be a plurality of low delay link transmission modes, which specifically include the following Mode 1 and Mode 2.

### Mode 1

Assistance link transmission: on the basis that an original link continues to transmit the data, a target link is added to assist low delay transmission. An example of the assistance link transmission is diversity transmission, in which the data transmitted on the target link is the same as that transmitted on the original link, so that a retransmission rate is reduced when a channel of the original link deteriorates. Another example of the assistance link transmission is multiplexing transmission, in which the data transmitted on the target link is different from that transmitted on the original link, so as to increase a data transmission rate.

### Mode 2

Switch link transmission: when a low delay transmission environment of an original link is seriously deteriorated, the original link stops performing transmission for the low delay data, and a newly added target link independently performs low delay transmission.

In some embodiments, the data transmission method may further include: the first node detects whether the first link satisfies the low delay data transmission requirement based on at least one of the following parameters: a delay bound, a mean data rate, or a packet loss rate.

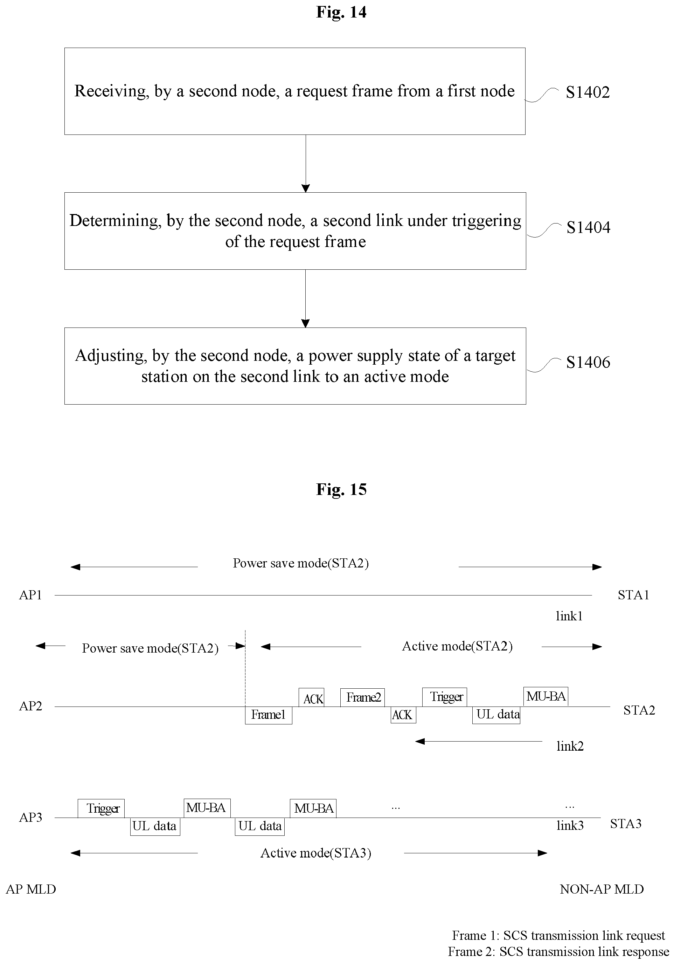

The embodiments of the present disclosure also provide a power state adjustment method. Fig. 14 is a flow chart of a power state adjustment method according to the embodiments of the present disclosure. As shown in Fig. 14, the power state adjustment method includes the following operations S1402 to S1406.

In operation S1402, a second node receives a request frame from a first node, wherein the request frame is sent by the first node in response to detecting that a first link for data transmission between the first node and the second node currently does not satisfy a low delay data transmission requirement.

In operation S1404, the second node determines a second link under triggering of the request frame, wherein the second link is a link satisfying the low delay data transmission requirement and included in other links except the first link, and the other links are pre-established links for data transmission between the first node and the second node.

In operation S1406, the second node adjusts a power state of a target station on the second link to an active mode.

By means of the operations S1402 to S1406, when it is determined that a new link needs to be enabled for data transmission, the first node and the second node may perform a negotiation so as to adjust the power state of a station on the new link to be enabled, so that the station on the new link can receive and send data in time. The solution provided in the embodiments of the present disclosure may realize timely transmission of data, avoid delayed transmission of low delay data, and effectively solve the problem of high data transmission delay which leads to the inability to transmit low delay data in a timely manner.

In the foregoing power state adjustment method, the first node may be an AP node or an AP MLD (Multi-Link Device) node, and the second node may be an STA or a non-AP MLD node.

In some embodiments, the operation that the second node receives the request frame from the first node includes: the second node receives a first request frame sent by the first node and used for requesting to determine the second link, wherein the request frame includes the first request frame. The operation that the second node determines the second link under the triggering of the request frame includes: the second node determines the second link based on a target selection mode under triggering of the first request frame. The power state adjustment method further includes: after the second node determines the second link under the triggering of the request frame, the second node returns a first response frame to the first node to instruct the first node to transmit data on the second link, wherein the first response frame carries first indication information used for indicating that the second link satisfies the low delay data transmission requirement.

In some embodiments, the operation that the second node receives the request frame from the first node includes: the second node receives a second request frame sent by the first node and used for requesting to determine the second link, wherein the second request frame carries second indication information used for indicating that the second link satisfies the low delay data transmission requirement, the second link is a link selected by the first node based on a target selection mode, and the request frame includes the second request frame. The operation that the second node determines the second link under the triggering of the request frame includes: the second node determines the second link based on the second indication information. The power state adjustment method further includes: after the second node determines the second link under the triggering of the request frame, the second node returns a second response frame to the first node to instruct the first node to transmit data on the second link.

In some embodiments, the operation that the second node receives the first request frame sent by the first node includes: the second node receives the first request frame sent by the first node on the first link. The operation that the second node returns the first response frame to the first node includes: the second node returns the first response frame to the first node on the second link.

In some embodiments, the operation that the second node receives the second request frame sent by the first node includes: the second node receives the second request frame sent by the first node on the first link. The operation that the second node returns the second response frame to the first node includes: the second node returns the second response frame to the first node on the second link.

In some embodiments, the power state adjustment method further includes: after the operation that the second node adjusts the power state of the target station on the second link to the active mode, the second node sends a first trigger frame to the first node, so as to trigger the first node to transmit data to the second node on the second link, wherein the first trigger frame is used for indicating that the second node has determined the second link and has adjusted the power state of the target station on the second link to the active mode.

In some embodiments, the operation that the second node receives the request frame sent by the first node includes: the second node receives a third request frame sent by the first node and used for requesting to determine the second link, wherein the third request frame carries third indication information used for indicating that the second link satisfies the low delay data transmission requirement, the second link is a link selected by the first node based on a target selection mode, and the request frame includes the third request frame. The power state adjustment method further includes: after the second node adjusts the power state of the target station on the second link to the active mode, the second node sends a second trigger frame to the first node, so as to trigger the first node to transmit data to the second node on the second link, wherein the second trigger frame is used for indicating that the second node has determined the second link and has adjusted the power state of the target station on the second link to the active mode.

In some embodiments, the operation that the second node receives the third request frame sent by the first node and used for requesting to determine the second link includes: the second node receives the third request frame sent by the first node on the first link and the second link.

In some embodiments, the power state adjustment method further includes at least one of the following: the second node receives target data transmitted by the first node only on the second link; the second node receives target data transmitted by the first node on the first link and the target data transmitted by the first node on the second link; or the second node receives a first part of data included in target data transmitted by the first node on the first link and other data, except the first part of data, included in the target data transmitted by the first node on the second link.

In some embodiments, the power state adjustment method further includes: the second node determines the second link based on a target selection mode in response to detecting that the first link currently does not satisfy the low delay data transmission requirement; the second node sends a fourth request frame to the first node to instruct the first node to transmit data on the second link, wherein the fourth request frame carries fourth indication information for indicating that the second link satisfies the low delay data transmission requirement; the second node receives a fourth response frame returned by the first node in response to the fourth request frame; and in a case where the fourth response frame is a reception response frame, the second node receives the data transmitted by the first node on the second link. In the foregoing embodiment, the fourth request frame may include an SCS Transmission Link Request (suggest) frame, the fourth indication information may include identification information in the Transmission Link Bitmap, for example, 011, the fourth response frame may include an SCS Transmission Link Response frame, and the reception response frame may include a Transmission Link Response (Accept) frame. The foregoing implementation is described below with reference to specific examples.

Fig. 15 is a schematic diagram of a downlink low delay transmission according to an example of the present disclosure. In the example, an assistance transmission link and an action frame are used, and the process in the example includes the following operations S1501 to S1504.

The above-mentioned embodiments may also be used in uplink low delay transmission. The transmission of an action frame on a target link triggers an AP MLD to perform necessary information collection for uplink low delay transmission. For example, in an uplink OFDMA access mechanism (UL OFDMA), related buffer information needs to be collected in advance through Buffer Status Reporting Protocol (BSRP)Buffer Status Reporting (BSR). Simply speaking, the action frame of the target link achieves the effect of a trigger frame.

In operation S1501, a non-AP MLD finds that a packet loss ratio on link3 is higher than a packet loss ratio (MSDU delivery ratio) requirement, and determines to switch the transmission link to link2 according to Mode 1 in the target link selection criteria.

In operation S1502, the non-AP MLD initiates an SCS Transmission Link Request (suggest) frame on link2, and the Transmission Link Bitmap carried in the SCS Transmission Link Request (suggest) frame is 011.

In operation S1503, an AP MLD receives the request sent by the non-AP MLD, and returns an SCS Transmission Link Response (Accept) frame to the non-AP MLD on link2.

In operation S1504, the non-AP MLD continues to transmit the uplink low delay data on link3; and the AP MLD triggers, through a Basic variant trigger on link2, the non-AP MLD to perform uplink low delay data transmission based on the trigger frame.

In some embodiments, the power state adjustment method further includes: before the second node receives the data transmitted by the first node on the second link, the second node adjusts the power state of the target station on the second link to the active mode.

In some embodiments, the second node detects whether the first link satisfies the low delay data transmission requirement based on at least one of the following parameters: a delay bound, a mean data rate, or a packet loss rate.

In some embodiments, the target selection mode includes: selecting the second link satisfying the low delay data transmission requirement based on at least one of: link measurements, channel load measurements, transmission traffic or transmission category measurements, or historical traffic statistics.

Through the description of the foregoing embodiments, those having ordinary skill in the art may clearly understand that the method according to the foregoing embodiments may be implemented in a manner of software plus a necessary universal hardware platform, and definitely may also be implemented by hardware only, but in many cases, the former is a preferred implementation. Based on such understanding, the essence of the technical solutions of the embodiments of the present disclosure or the part contributing to the related art may be implemented in the form of a software product. The computer software product may be stored in a storage medium (such as a Read-Only Memory (ROM)/Random Access Memory (RAM), a magnetic disk, or an optical disk), and includes several instructions for enabling a terminal device (which may be a mobile phone, a computer, a server, or a network device) to execute the methods described in the embodiments of the present disclosure.

The embodiments of the present disclosure further provide a data transmission device and a power state adjustment device. The above-mentioned two devices are respectively used for implementing the described embodiments and exemplary implementations, and what has been described will not be elaborated. As used below, the term "module" may be a combination of software and/or hardware with a predetermined function. Although the device described in the following embodiment is preferably implemented by software, implementation of hardware or a combination of software and hardware is also possible and conceivable.

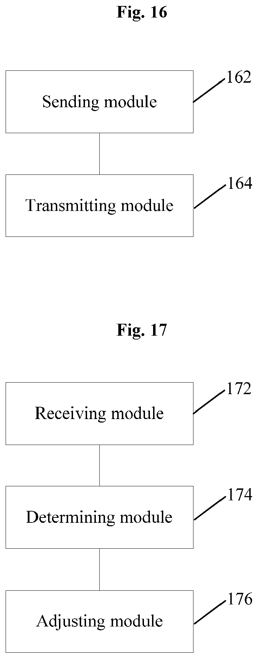

Fig. 16 is a structural block diagram of a data transmission device according to the embodiments of the present disclosure. The device may be provided in a first node. As shown in Fig. 16, the device includes a sending module 162 and a transmitting module 164.

The sending module 162 is configured to send a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and included in other links except the first link, and the other links are pre-established links for data transmission between the first node and the second node.

The transmitting module 164 is configured to transmit data to the second node on the second link.

In some embodiments, the sending module 162 includes a first sending unit configured to send a first request frame to the second node to request the second node to determine the second link, wherein the request frame includes the first request frame; the data transmission device is further configured to, before transmitting data to the second node on the second link, receive a first response frame returned by the second node in response to the first request frame; the transmitting module 164 includes a first transmitting unit configured to, in a case of determining that the first response frame is a reception response frame, determine the second link from first indication information carried in the first response frame and used for indicating that the second link satisfies the low delay data transmission requirement, and transmit the data to the second node on the second link, wherein the second link is a link selected by the second node based on a target selection mode.

In some embodiments, the sending module 162 includes a second sending unit configured to select the second link based on a target selection mode, and send, to the second node, a second request frame carrying second indication information used for indicating that the second link satisfies the low delay data transmission requirement, so as to instruct the second node to determine the second link and adjust the power state of the target station on the second link to the active mode, wherein the request frame includes the second request frame; the data transmission device is further configured to, before transmitting data to the second node on the second link, receive a second response frame returned by the second node in response to the second request frame; the transmitting module 164 includes a second transmitting unit configured to, in a case of determining that the second response frame is a reception response frame, transmit the data to the second node on the second link.

In some embodiments, the target selection mode includes: selecting the second link satisfying the low delay data transmission requirement based on at least one of: link measurements, channel load measurements, transmission traffic or transmission category measurements, or historical traffic statistics.

In some embodiments, the first sending unit includes a first sending subunit configured to send the first request frame to the second node on the first link; the data transmission device is configured to receive the first response frame returned by the second node in response to the first request frame in the following manner: receiving the first response frame returned on the second link by the second node in response to the first request frame.

In some embodiments, the second sending unit includes a second sending subunit configured to send the second request frame to the second node on the first link; the data transmission device is configured to receive the second response frame returned by the second node in response to the second request frame in the following manner: receiving the second response frame returned by the second node on the second link in response to the second request frame.

In some embodiments, the transmitting module 164 includes a third transmitting unit configured to transmit the data to the second node on the second link in response to receiving a first trigger frame from the second node, wherein the first trigger frame is used for indicating that the second node has determined the second link and has adjusted the power state of the target station on the second link to the active mode.

In some embodiments, the sending module 162 includes a third sending unit configured to select the second link based on a target selection mode, and send, to the second node, a third request frame carrying third indication information used for indicating that the second link satisfies the low delay data transmission requirement, so as to instruct the second node to determine the second link and adjust the power state of the target station on the second link to the active mode, wherein the request frame includes the third request frame; the transmitting module 164 includes a third transmitting unit configured to transmit the data to the second node on the second link in response to receiving a second trigger frame from the second node, wherein the second trigger frame is used for indicating that the second node has determined the second link and has adjusted the power state of the target station on the second link to the active mode.

In some embodiments, the third sending unit includes a third sending subunit configured to send the third request frame to the second node on the first link and the second link.

In some embodiments, the transmitting module 164 includes a fourth transmitting unit configured to stop transmitting target data to the second node on the first link and transmit the target data to the second node on the second link; a fifth transmitting unit configured to transmit target data to the second node on the first link and transmit the target data to the second node on the second link; and a sixth transmitting unit configured to transmit a first part of data included in target data to the second node on the first link and transmit other data, except the first part of data, included in the target data to the second node on the second link.

In some embodiments, the data transmission device is further configured to detect whether the first link satisfies the low delay data transmission requirement based on at least one of the following parameters: a delay bound, a mean data rate, or a packet loss rate.

Fig. 17 is a block diagram of a power state adjustment device according to the embodiments of the present disclosure. The device may be provided in a second node. As shown in Fig. 17, the device includes a receiving module 172, a determining module 174, and an adjusting module 176.

The receiving module 172 is configured to receive a request frame from a first node, wherein the request frame is sent by the first node in response to detecting that a first link for data transmission between the first node and the second node currently does not satisfy a low delay data transmission requirement.

The determining module 174 is configured to determine a second link under triggering of the request frame, wherein the second link is a link satisfying the low delay data transmission requirement and included in other links except the first link, and the other links are pre-established links for data transmission between the first node and the second node.

The adjusting module 176 is configured to adjust a power state of a target station on the second link to an active mode.

In some embodiments, the receiving module 172 includes a first receiving unit configured to receive a first request frame sent by the first node and used for requesting to determine the second link, wherein the request frame includes the first request frame; the determining module 174 includes a first determining unit configured to determine the second link based on a target selection mode under triggering of the first request frame; and the power state adjustment device is further configured to, after determining the second link under the triggering of the request frame, return a first response frame to the first node to instruct the first node to transmit data on the second link, wherein the first response frame carries first indication information used for indicating that the second link satisfies the low delay data transmission requirement.

In some embodiments, the receiving module 172 includes a second receiving unit configured to receive a second request frame sent by the first node and used for requesting to determine the second link, wherein the second request frame carries second indication information used for indicating that the second link satisfies the low delay data transmission requirement, the second link is a link selected by the first node based on a target selection mode, and the request frame includes the second request frame; the determining module 174 includes a first determining unit configured to determine the second link based on the second indication information; and the power state adjustment device is further configured to, after determining the second link under the triggering of the request frame, return a second response frame to the first node to instruct the first node to transmit data on the second link.

In some embodiments, the first receiving unit includes a first receiving subunit configured to receive the first request frame sent by the first node on the first link; and the power state adjustment device is configured to return the first response frame to the first node in the following manner: returning the first response frame to the first node on the second link.

In some embodiments, the second receiving unit includes a second receiving subunit configured to receive the second request frame sent by the first node on the first link; and the power state adjustment device is configured to return the second response frame to the first node in the following manner: returning the second response frame to the first node on the second link.

In some embodiments, the power state adjustment device is further configured to, after adjusting the power state of the target station on the second link to the active mode, send a first trigger frame to the first node, so as to trigger the first node to transmit data to the second node on the second link, wherein the first trigger frame is used for indicating that the second node has determined the second link and has adjusted the power state of the target station on the second link to the active mode.

In some embodiments, the receiving module 172 includes a third receiving unit configured to receive a third request frame sent by the first node and used for requesting to determine the second link, wherein the third request frame carries third indication information used for indicating that the second link satisfies the low delay data transmission requirement, the second link is a link selected by the first node based on a target selection mode, and the request frame includes the third request frame; and the power state adjustment device is further configured to, after adjusting the power state of the target station on the second link to the active mode, send a second trigger frame to the first node, so as to trigger the first node to transmit data to the second node on the second link, wherein the second trigger frame is used for indicating that the second node has determined the second link and has adjusted the power state of the target station on the second link to the active mode.

In some embodiments, the third receiving unit includes a third receiving subunit configured to receive the third request frame sent by the first node on the first link and the second link.

In some embodiments, the power state adjustment device is further configured to perform at least one of the following operations: receiving target data transmitted by the first node only on the second link; receiving target data transmitted by the first node on the first link and the target data transmitted by the first node on the second link; or receiving a first part of data included in target data transmitted by the first node on the first link and other data, except the first part of data, included in the target data transmitted by the first node on the second link.

In some embodiments, the power state adjustment device is further configured to perform the following operations: determining the second link based on a target selection mode in response to detecting that the first link currently does not satisfy the low delay data transmission requirement; sending a fourth request frame to the first node to instruct the first node to transmit data on the second link, wherein the fourth request frame carries fourth indication information for indicating that the second link satisfies the low delay data transmission requirement; receiving a fourth response frame returned by the first node in response to the fourth request frame; and in a case where the fourth response frame is a reception response frame, receiving the data transmitted by the first node on the second link.

In some embodiments, the power state adjustment device is further configured to, before receiving the data transmitted by the first node on the second link, adjust the power state of the target station on the second link to the active mode.

In some embodiments, the power state adjustment device is further configured to detect whether the first link satisfies the low delay data transmission requirement based on at least one of the following parameters: a delay bound, a mean data rate, or a packet loss rate.

In some embodiments, the target selection mode includes: selecting the second link satisfying the low delay data transmission requirement based on at least one of: link measurements, channel load measurements, transmission traffic or transmission category measurements, or historical traffic statistics.

The embodiments of the present disclosure further provide a computer readable storage medium. The computer readable storage medium stores a computer program. The computer program, when running on a processor, causes the processor to execute the operations of the data transmission method or the power state adjustment method.

In some embodiments, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure also provide an electronic device, including a memory and a processor, wherein the memory stores a computer program, and the processor is configured to run the computer program to execute the operations of the data transmission method or the power state adjustment method.

In some embodiments, the electronic device may further include a transmission device and an input/output device, wherein the transmission device is connected to the processor, and the input/output device is connected to the processor.

For specific examples in the present embodiment, reference may be made to the examples described in the foregoing embodiments and exemplary embodiments, and details are not repeatedly described herein.

Those having ordinary skill in the art should understand that each module or each operation in the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. Thus, the present disclosure is not limited to any particular combination of hardware and software.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. A data transmission method, comprising:
sending, by a first node, a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and comprised in other links except the first link, and the other links are pre-established links for data transmission between the first node and the second node; and
transmitting, by the first node, data to the second node on the second link.

2. The data transmission method according to claim 1, wherein
the sending, by a first node, a request frame to a second node comprises: sending, by the first node, a first request frame to the second node to request the second node to determine the second link, wherein the request frame comprises the first request frame;
the data transmission method further comprises: before the transmitting, by the first node, data to the second node on the second link, receiving, by the first node, a first response frame returned by the second node in response to the first request frame; and
the transmitting, by the first node, data to the second node on the second link comprises: in a case where the first node determines that the first response frame is a reception response frame, determining, by the first node, the second link from first indication information carried in the first response frame and used for indicating that the second link satisfies the low delay data transmission requirement, and transmitting, by the first node, the data to the second node on the second link, wherein the second link is a link selected by the second node based on a target selection mode.

3. The data transmission method according to claim 1, wherein
the sending, by a first node, a request frame to a second node comprises: selecting, by the first node, the second link based on a target selection mode, and sending, to the second node by the first node, a second request frame carrying second indication information used for indicating that the second link satisfies the low delay data transmission requirement, so as to instruct the second node to determine the second link and adjust the power state of the target station on the second link to the active mode, wherein the request frame comprises the second request frame;
the data transmission method further comprises: before the transmitting, by the first node, data to the second node on the second link, receiving, by the first node, a second response frame returned by the second node in response to the second request frame; and
the transmitting, by the first node, data to the second node on the second link comprises: in a case where the first node determines that the second response frame is a reception response frame, transmitting, by the first node, the data to the second node on the second link.

4. The data transmission method according to claim 2 or 3, wherein the target selection mode comprises:
selecting the second link satisfying the low delay data transmission requirement based on at least one of:
link measurements, channel load measurements, transmission traffic or transmission category measurements, or historical traffic statistics.

5. The data transmission method according to claim 2, wherein
the sending, by the first node, a first request frame to the second node comprises: sending, by the first node, the first request frame to the second node on the first link; and
the receiving, by the first node, a first response frame returned by the second node in response to the first request frame comprises: receiving, by the first node, the first response frame returned on the second link by the second node in response to the first request frame.

6. The data transmission method according to claim 3, wherein
the sending, to the second node by the first node, a second request frame comprises: sending, by the first node, the second request frame to the second node on the first link; and
the receiving, by the first node, a second response frame returned by the second node in response to the second request frame comprises: receiving, by the first node, the second response frame returned by the second node on the second link in response to the second request frame.

7. The data transmission method according to claim 1, wherein the transmitting, by the first node, data to the second node on the second link comprises:
transmitting, by the first node, the data to the second node on the second link in response to receiving a first trigger frame from the second node, wherein the first trigger frame is used for indicating that the second node has determined the second link and has adjusted the power state of the target station on the second link to the active mode.

8. The data transmission method according to claim 1, wherein
the sending, by a first node, a request frame to a second node comprises: selecting, by the first node, the second link based on a target selection mode, and sending, to the second node by the first node, a third request frame carrying third indication information used for indicating that the second link satisfies the low delay data transmission requirement, so as to instruct the second node to determine the second link and adjust the power state of the target station on the second link to the active mode, wherein the request frame comprises the third request frame; and
the transmitting, by the first node, data to the second node on the second link comprises: transmitting, by the first node, the data to the second node on the second link in response to receiving a second trigger frame from the second node, wherein the second trigger frame is used for indicating that the second node has determined the second link and has adjusted the power state of the target station on the second link to the active mode.

9. The data transmission method according to claim 8, wherein the sending, to the second node by the first node, a third request frame comprises:
sending, by the first node, the third request frame to the second node on the first link and the second link.

10. The data transmission method according to claim 1, wherein the transmitting, by the first node, data to the second node on the second link comprises one of:
stopping, by the first node, transmitting target data to the second node on the first link, and transmitting, by the first node, the target data to the second node on the second link;
transmitting, by the first node, target data to the second node on the first link, and transmitting, by the first node, the target data to the second node on the second link; or
transmitting, by the first node, a first part of data comprised in target data to the second node on the first link, and transmitting, by the first node, other data, except the first part of data, comprised in the target data to the second node on the second link.

11. The data transmission method according to claim 1, further comprising:
detecting, by the first node, whether the first link satisfies the low delay data transmission requirement based on at least one of the following parameters:
a delay bound, a mean data rate, or a packet loss rate.

12. A power state adjustment method, comprising:
receiving, by a second node, a request frame from a first node, wherein the request frame is sent by the first node in response to detecting that a first link for data transmission between the first node and the second node currently does not satisfy a low delay data transmission requirement;
determining, by the second node, a second link under triggering of the request frame, wherein the second link is a link satisfying the low delay data transmission requirement and comprised in other links except the first link, and the other links are pre-established links for data transmission between the first node and the second node; and
adjusting, by the second node, a power state of a target station on the second link to an active mode.

13. The power state adjustment method according to claim 12, wherein
the receiving, by a second node, a request frame from a first node comprises: receiving, by the second node, a first request frame sent by the first node and used for requesting to determine the second link, wherein the request frame comprises the first request frame;
the determining, by the second node, a second link under triggering of the request frame comprises: determining, by the second node, the second link based on a target selection mode under triggering of the first request frame; and
the power state adjustment method further comprises: after the determining, by the second node, a second link under triggering of the request frame, returning, by the second node, a first response frame to the first node to instruct the first node to transmit data on the second link, wherein the first response frame carries first indication information used for indicating that the second link satisfies the low delay data transmission requirement.

14. The power state adjustment method according to claim 12, wherein
the receiving, by a second node, a request frame from a first node comprises: receiving, by the second node, a second request frame sent by the first node and used for requesting to determine the second link, wherein the second request frame carries second indication information used for indicating that the second link satisfies the low delay data transmission requirement, the second link is a link selected by the first node based on a target selection mode, and the request frame comprises the second request frame;
the determining, by the second node, a second link under triggering of the request frame comprises: determining, by the second node, the second link based on the second indication information; and
the power state adjustment method further comprises: after the determining, by the second node, a second link under triggering of the request frame, returning, by the second node, a second response frame to the first node to instruct the first node to transmit data on the second link.

15. The power state adjustment method according to claim 13, wherein
the receiving, by the second node, a first request frame sent by the first node comprises: receiving, by the second node, the first request frame sent by the first node on the first link; and
the returning, by the second node, a first response frame to the first node comprises: returning, by the second node, the first response frame to the first node on the second link.

16. The power state adjustment method according to claim 14, wherein
the receiving, by the second node, a second request frame sent by the first node comprises: receiving, by the second node, the second request frame sent by the first node on the first link; and
the returning, by the second node, a second response frame to the first node comprises: returning, by the second node, the second response frame to the first node on the second link.

17. The power state adjustment method according to claim 12, further comprising:
after the adjusting, by the second node, a power state of a target station on the second link to an active mode, sending, by the second node, a first trigger frame to the first node, so as to trigger the first node to transmit data to the second node on the second link, wherein the first trigger frame is used for indicating that the second node has determined the second link and has adjusted the power state of the target station on the second link to the active mode.

18. The power state adjustment method according to claim 12, wherein
the receiving, by a second node, a request frame from a first node comprises: receiving, by the second node, a third request frame sent by the first node and used for requesting to determine the second link, wherein the third request frame carries third indication information used for indicating that the second link satisfies the low delay data transmission requirement, the second link is a link selected by the first node based on a target selection mode, and the request frame comprises the third request frame; and
the power state adjustment method further comprises: after the adjusting, by the second node, a power state of a target station on the second link to an active mode, sending, by the second node, a second trigger frame to the first node, so as to trigger the first node to transmit data to the second node on the second link, wherein the second trigger frame is used for indicating that the second node has determined the second link and has adjusted the power state of the target station on the second link to the active mode.

19. The power state adjustment method according to claim 18, wherein the receiving, by the second node, a third request frame sent by the first node and used for requesting to determine the second link comprises:
receiving, by the second node, the third request frame sent by the first node on the first link and the second link.

20. The power state adjustment method according to claim 12, further comprising at least one of:
receiving, by the second node, target data transmitted by the first node only on the second link;
receiving, by the second node, target data transmitted by the first node on the first link and the target data transmitted by the first node on the second link; or
receiving, by the second node, a first part of data comprised in target data transmitted by the first node on the first link and other data, except the first part of data, comprised in the target data transmitted by the first node on the second link.

21. The power state adjustment method according to claim 12, further comprising:
determining, by the second node, the second link based on a target selection mode in response to detecting that the first link currently does not satisfy the low delay data transmission requirement;
sending, by the second node, a fourth request frame to the first node to instruct the first node to transmit data on the second link, wherein the fourth request frame carries fourth indication information for indicating that the second link satisfies the low delay data transmission requirement;
receiving, by the second node, a fourth response frame returned by the first node in response to the fourth request frame; and
in a case where the fourth response frame is a reception response frame, receiving, by the second node, the data transmitted by the first node on the second link.

22. The power state adjustment method according to claim 21, further comprising:
before the receiving, by the second node, the data transmitted by the first node on the second link, adjusting, by the second node, the power state of the target station on the second link to the active mode.

23. The power state adjustment method according to claim 21, further comprising:
detecting, by the second node, whether the first link satisfies the low delay data transmission requirement based on at least one of the following parameters:
a delay bound, a mean data rate, or a packet loss rate.

24. The power state adjustment method according to any one of claims 13, 14 and 21, wherein the target selection mode comprises:
selecting the second link satisfying the low delay data transmission requirement based on at least one of:
link measurements, channel load measurements, transmission traffic or transmission category measurements, or historical traffic statistics.

25. A data transmission device, provided in a first node and comprising:
a sending module, configured to send a request frame to a second node in response to detecting that a first link for data transmission between the first node and the second node currently does not satisfy a low delay data transmission requirement, so as to trigger the second node to determine a second link and adjust a power state of a target station on the second link to an active mode, wherein the second link is a link satisfying the low delay data transmission requirement and comprised in other links except the first link, and the other links are pre-established links for data transmission between the first node and the second node; and
a transmitting module, configured to transmit data to the second node on the second link.

26. A power state adjustment device, provided in a second node and comprising:
a receiving module, configured to receive a request frame from a first node, wherein the request frame is sent by the first node in response to detecting that a first link for data transmission between the first node and the second node currently does not satisfy a low delay data transmission requirement;
a determining module, configured to determine a second link under triggering of the request frame, wherein the second link is a link satisfying the low delay data transmission requirement and comprised in other links except the first link, and the other links are pre-established links for data transmission between the first node and the second node; and
an adjusting module, configured to adjust a power state of a target station on the second link to an active mode.

27. A computer readable storage medium, storing a computer program, wherein the computer program, when running on a processor, causes the processor to implement the data transmission method according to any one of claims 1 to 11 or implement the power state adjustment method according to any one of claims 12 to 24.

28. An electronic device, comprising a memory, a processor, and a computer program stored in the memory and capable of running on the processor, wherein the processor, when running the computer program, implements the data transmission method according to any one of claims 1 to 11, or implements the power state adjustment method according to any one of claims 12 to 24.
